(19) Europäisches Patentamt
European Patent Office
Office européen des brevets

(11) Publication number: 0 347 183
A2

(12) # EUROPEAN PATENT APPLICATION

(21) Application number: 89305978.2

(22) Date of filing: 13.06.89

(51) Int. Cl.4: C 09 B 67/44
G 11 B 7/24

(30) Priority: 14.06.88 JP 144755/88

(43) Date of publication of application:
20.12.89 Bulletin 89/51

(84) Designated Contracting States: DE GB

(71) Applicant: FUJI PHOTO FILM CO., LTD.
210 Nakanuma Minami Ashigara-shi
Kanagawa (JP)

(72) Inventor: Yabe, Masao
c/o Fuji Film Co. Ltd. No. 200, Oonakazato
Fujinomiya-shi Shizuoka (JP)

Inagaki, Yoshio
c/o Fuji Film Co. Ltd. No. 210, Nakanuma
Minami-ashigara-shi Kanagawa (JP)

(74) Representative: Arthur, Bryan Edward et al
4 Dyers Buildings Holborn
London, EC1N 2JT (GB)

(54) **Dye solution and process for the preparation of information recording medium.**

(57) A dye solution comprises a specific cyanine dye and a specific diimmonium compound dissolved in a liquid fluorine-containing compound. A process for preparing an information recording medium comprising a plastic substrate and recording layer provided thereon in which the recording layer is formed on the substrate by coating the dye solution over the substrate and drying thus coated layer is also layer disclosed.

EP 0 347 183 A2

**Description**

# DYE SOLUTION AND PROCESS FOR THE PREPARATION OF INFORMATION RECORDING MEDIUM

## BACKGROUND OF THE INVENTION

### Field of the Invention

The present invention relates to a dye solution which is advantageously used for preparing an information recording medium for writing (i.e., recording ) and/or reading out (i.e.,reproducing) information by means of laser beam having high energy density.

### Description of Prior Art

Information recording media for recording and/or reproducing information by the use of laser beam of high energy density have been developed in recent years and are put into practical use. Such recording media have been widely utilized in various fields, for example, as an optical disc such as a video disc and an audio disc as well as a disc memory for a large-capacity computer and a large-capacity static image file, a micro-image recording medium, an ultramicro-image recording medium, a micro-facsimile, and optical card.

The conventional optical information recording medium basically comprises a transparent substrate made of a plastic material or a glass material and a recording layer provided on the substrate. As material of the recording layer, metals such as Bi, Sn, In and Te or semimetals, and dyes such as a cyanine dye, a metal complex compound and a quinone dye are generally known.

Writing (i.e., recording) of information on the recording medium can be conducted, for example, by irradiating the medium with the laser beam, the irradiated area of the recording layer of the recording medium absorbs energy of the beam and rise of temperature locally occurs and, as a result, a chemical or physical change is caused to alter (or change) optical characteristics of the recording layer in the irradiated area, whereby the recording of information is made. Reading of the information from the recording medium is also conducted by irradiating the medium with a laser beam. The information can be reproduced by detecting reflected light or transmitted light corresponding to the change in the optical characteristics of the recording layer.

Recently, an optical disc having an air-sandwich structure for protecting the recording layer has been proposed. The optical disc of air-sandwich structure comprises two disc-shaped substrates, a recording layer provided on at least one of the substrates and two ring-shaped spacers (inner spacer and outer spacer), said two substrates interposing the recording layer being combined with each other in such a manner that a closed space is formed by the two substrata and two spacers. In such recording medium, the recording layer is kept from direct exposure to an outer air, and recording or reproduction of information is carried out by applying a light of the laser beam to the recording layer through the substrate, whereby the recording layer is generally kept from physical or chemical damage. Further, the surface of the recording layer can be kept from deposition of dust which likely causes troubles in the recording and reproducing procedures.

An information recording medium using a dye as a recording material is excellent in some characteristics required for recording media such as high sensitivity, and additionally the medium has other advantageous features such that the recording layer can be easily formed on the substrate by conventional coating method. However, such dye recording layer is apt to deteriorate under irradiation with a laser beam, that is, the dye recording layer easily suffers from photo-deterioration. The dye recording layer has a high sensitivity as described above, but this means that initial energy required for forming pits is small, and the dye recording layer rather requires larger energy in order to form complete pits than a metal recording layer.

The above mentioned photo-deterioration of the dye recording layer is basically caused by that the dye dose not have a sufficient light-resistance. For preventing such photo-deterioration of the dye, a method of adding a specific diimmonium compound to a specific indolenine dye is proposed, as described in Japanese Patent Provisional Publication No. 62(1987)-50187. The method can prevent the photo-deterioration, but when the indolenine dye is used as a material of the recording layer, the resulting recording layer cannot show satisfactory reflectance and high C/N ratio, because the dye dose not have sufficient characteristics required for recording of information.

In general, most of dyes including a cyanine dye are low in solubility, so that in the preparation of a coating solution using those dyes, solvents having high dissolving power (solvency) for those dyes such as chlorinated hydrocarbons (e.g., dichloromethane and dichloroethane) are generally utilized.

However, a substance made of a plastic material has poor resistance to those chlorinated hydrocarbons, and the surface of the substrate is easily dissolved in the coating solution when the solution is coated over the substrate. As a result, there occur various troubles such that protruded and depressed portions for a tracking groove on the surface of the substrate are eliminated, or a portion of a material of the substrate is migrated into the recording layer. For coping with such trouble, Japanese Patent Provisional Publication No. 59(1984)-217241 states that the plastic substrate is beforehand subjected to an insolubilizing treatment to reduce dissolution by the chlorinated hydrocarbon solvent.

## SUMMERY OF THE INVENTION

It is an object of the present invention to provide a novel dye solution which is advantageously employed for preparing an information recording medium, and a process for the preparing an information recording medium using said dye solution.

It is another object of the invention to provide a process for the preparation of an information recording medium in which a recording layer showing satisfactory recording and reproducing properties and high light-resistance can be formed on the plastic substrate by a generally known coating method without dissolving the substrate, and dye solution which is advantageously employed in said process.

It is a further object of the invention to provide a process for the preparation of an information recording medium in which an information recording medium having excellent recording and reproducing properties and high light-resistance can be easily prepared.

There is provided by the invention a dye solution comprising a cyanine dye and a diimmonium compound dissolved in a liquid fluorine-containing compound, wherein:

said cyanine dye has the formula (I):

$\Phi^{+}$ -$(CH=CH)_nCH$ = $\Psi$ $(X^{m-})_{1/m}$ (I)

in which each of $\Phi$ and $\Psi$ is independently a residue (the part of the molecule that remains after the removal of one ($\Phi$) or two ($\Psi$) hydrogen atom(s) from the following ring or amine) of an indorenine ring, a thiazole ring, an oxazole ring, a selenazole ring, an imidazole ring, a pyridine ring, a thiazolopyrimidine ring, an imidzoquinoxaline ring or an amine, which may be condensed with an aromatic ring; n is 0 or an integer of 1 to 5; $X^{m-}$ is an m-valent anion; m is 0 or 1; and $X^{m-}$may be substituted on $\Phi$ or $\Psi$ to form an inner salt; and said diimmonium compound has the formula (II):

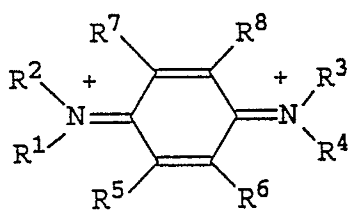 $2/nX^{n-}$ (II)

in which each of $R^1$, $R^2$, $R^3$, and $R^4$ is independently an alkyl group, an alkenyl group or an aryl group, which may be a substituted group; each of $R^5$, $R^6$, $R^7$ and $R^8$ is independently hydrogen, a halogen atom, an alkyl group which may be a substituted group, an alkenyl group which may be a substituted group, a phenyl group which may be a substituted group, an alkoxy group which may be a substituted group, a phenoxy group which may be a substituted group, an acyl group which may be a substituted group, an alkylsulfonyl group which may be a substituted group, a benzensulfonyl group which may be a substituted group, or a cyano group; n is 1 or 2; and each combination of $R^1$ and $R^2$, $R^3$ and $R^4$, $R^5$ and $R^6$, and $R^7$ and $R^8$ may be linked to each other, respectively, to form a ring.

There is also provided by the invention a process for the preparation of an information recording medium comprising a plastic substrate and a recording layer of dye for writing or reading information by means of a laser beam which is provided on the substrate, wherein said recording layer is formed on the substrate by coating the above-mentioned dye solution over the substrate to form a coated layer.

The dye solution of the invention conprises a specific cyanine dye, a specific diimmonium compound and liquid fluorine-containing compound as its host components.

Employment of the dye solution of the invention makes it possible to prepare an information recording medium which is improved in recording properties and light-resistance.

The cyanine dye employable in the invention which is characterized by the methine group(s) having no substituent group as shown in the formula (I), can show prominently high reflectance and high C/N ratio when used as a material of the recording layer. However, the cyanine dye easily deteriorates under irradiation with a laser beam, so that the above-mentioned specific diimmonium compound having the formula (II) is added to improve the light-resistance. The cyanine dye also suffers other problems that the dye can be hardly dissolved in conventional known solvents, or if a solvent having high solvency (dissolving power) for the dye is used, the solvent would dissolve the plastic substrate of the recording medium. However, the liquid fluorine-containing compound used for preparing the dye solution composition of the invention has a high solvency for the above-mentioned cyanine dye, so that a coating solution for the formation of a recording layer can be easily prepared. On the other hand, the liquid fluorine-containing compound has no solvency for a substrate made of a plastic material such as polycarbonate, so that the substrate cannot be dissolved in the fluorine-containing compound during the coating procedure.

Accordingly, an information recording medium having high reflectance and high C/N ratio as well as improved light-resistance can be obtained by the process using the dye solution of the invention. Moreover, the obtained information recording medium is excellent in various durability such as durability in the reeding procedure because of high light-resistance.

## DETALLED DESCRIPTION OF THE INVENTION

An information recording medium can be prepared, for example, by the following process according to the present invention.

A material of the substrate employable in the invention can be selected from any materials which have been employed as the substrates of the conventional recording media. From the viewpoint of optical characteristics, smoothness, workability, handling properties, long-term stability and manufacturing cost, preferred examples of the substrate materials include acrylic resins such as cell-cast polymethyl methcrylate and injection-molded polymethyl methacrylate; vinyl chloride resins such as polyvinyl chloride and vinyl chloride copolymer; epoxy resins; polycarbonate; amorphous polyolefins; and polyesters.

The process of the invention is most effectively applied to the case of using the plastic material as the substrate, and among the plastic materials, polycarbonate, polymethyl methacrylate, epoxy resins, amorphous polyolefins, polyesters and polyvinyl chloride are preferably employed in the invention. From the viewpoint of dimensional stability, transparency and smoothness, preferred are polymethyl methacrylate, polycarbonate resins, epoxy resins, amorphous polyolefins, and polyesters. The process is particularly effective for the substrate of polycarbonate which is easily dissolved in conventional organic solvents. Those materials can be used as substrates in the form of a flexible film or in the form of a rigid plate.

The surface of the substrate of which a recording layer is to be coated may be provided with an undercoating layer for the purpose of improving smoothness and adhesion to the recording layer and preventing the recording layer from being denatured. Examples of materials of the undercoating layer include polymer materials such as polymethyl methacrylate, acrylic acid/methacrylic acid copolymer, styrene/maleic anhydride copolymer,polyvinyl alcohol, N-methylol acrylamide/acrylamide copolymer, styrene/vinyl toluene copolymer, chlorosulfonated polyethylene, nitrocellulose, polyvinyl chloride, chlorinated polyolefin, polyester, polyimide, vinyl acetate/vinyl chloride copolymer, ethylene/vinyl acetate copolymer, polyethylene, polypropylene and polycarbonate; and organic materials such as silane-coupling agents.

The undercoating layer can be formed, for example, by dissolving or despersing the above-mentioned material in an appropriate solvent and coating the resulting solution or dispersion on a substrate through a known coating method such as spin coating, dip coating, extrusion coating. The thickness of the undercoating layer is generally in the range of 0.005 to 20 μm, preferably in the range of 0.01 to 10 μm.

On the substrate (or the undercoating layer ) may be provided a pregroove layer for the purpose of forming a tracking groove or protruded and depressed portions which indicate information such as address signals. As a material for the pregroove layer, there can be employed a mixture of at least one monomer (or oligomer) selected from the group consisting of monoester, diester, triester and tetraester of an acrylic acid and a photoinitiator.

The pregroove layer can be formed on the substrate (or the undercoating layer) by the process described below. In the first place, a mixed solution of the acrylic acid ester and the photoinitiator is coated on a precisely prepared stamper, and on the coated liquid layer of the solution is placed a substrate. Then the coated layer is cured under irradiation with ultraviolet rays via the stamper or the substrate so as to fix the substrate to the coated liquid layer. Subsequently, the substrate is separated from the stamper. Thus, a substrate provided with a pregroove layer can be prepared. The thickness of the pregroove layer is generally in the range of 0.05 to 50 μm. Alternatively, a pregroove can be formed directly on the substrate by means of injection molding or extrusion molding.

The liquid fluorine-containing compound employable as a solvent in the invention dissolves neither the plastic substrate nor the material of the pregroove layer, so that the aforementioned effects can be obtained not only in the case of providing the recording layer directly on the substrate but also in the case of providing the recording layer on the pregroove layer.

On the substrate (or the pregroove layer, etc.) is provided a recording layer.

The recording layer is a layer comprising substantially a dye and a diimmonium compound or a layer comprising a binder and the dye and diimmonium compound dispersed therein.

The dye employable in the invention is a cyanine dye having methine groups without a substituent group as shown in the formula (I):

$\Phi^{+}$ -(CH=CH)$_n$CH = $\Psi$ $(X^{m-})_{1/m}$ (I)

in which each of $\Phi$ and $\Psi$ is independently a residue (an atomic group to form the following ring or amine) of an endolenine ring, a thiazole ring, an oxazole ring, a selenazole ring, an imidazole ring, a pyridine ring, a thiazolopyrimidine ring, an imidzoquinoxaline ring or an amine, which may be condensed with an aromatic ring; -(CH=CH)$_n$CH= is a linkage group for forming cyanine, monocarbocyanine, dicarbocyanine, tricarbocyanine, tetracarbocyanine or pentacarbocyanine; n is 0 or an integer of 1 to 5; $X^{m-}$ is an m-valent anion; m is 0 or 1; and $X^{m-}$may be substituted on $\Phi$ or $\Psi$ to form an inner salt.

In the formula (I), each of $\Phi$ and $\Psi$ preferably is a residue of an indolenine ring or imidazoquinoxaline ring which may be condensed with an aromatic ring, from the viewpoint of enhancement in the reflectance and C/N ratio of the resulting recording layer.

Examples of the anions indicated by $X^{m-}$ in the formula (I) include $Cl^-$, $Br^-$, $I^-$, $CH_3OSO_3^-$, paratoluenesulfonic acid ion, p-chlorobenzenesulfonic acid ion, naphthalene-1,5-disulfonic acid ion, trifluoromethanesulfonic acid

ion, trifluoromethanesulfonic acid ion, $PF_6^-$ and $ClO_4^-$.

Concrete examples of the compounds having the above formula (I) include the following compounds (a) to (l):

[a]

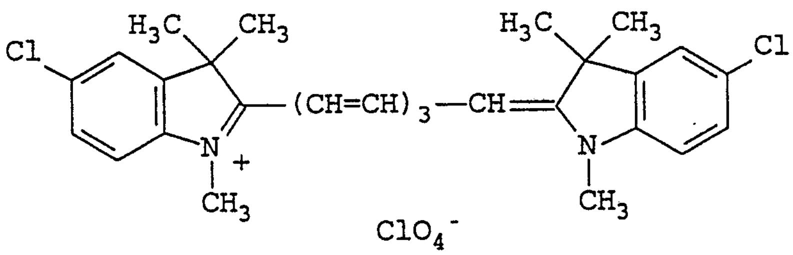

[b]

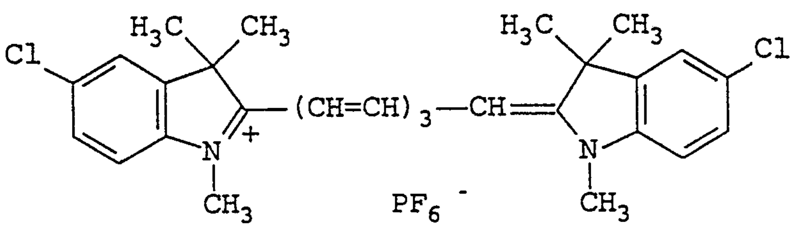

[c]

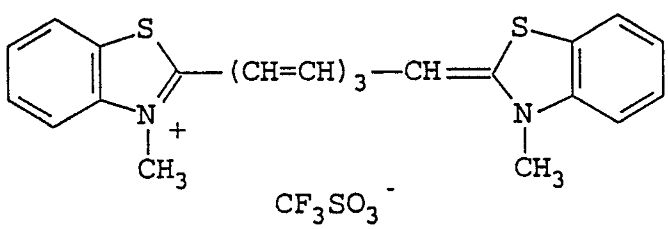

[d]

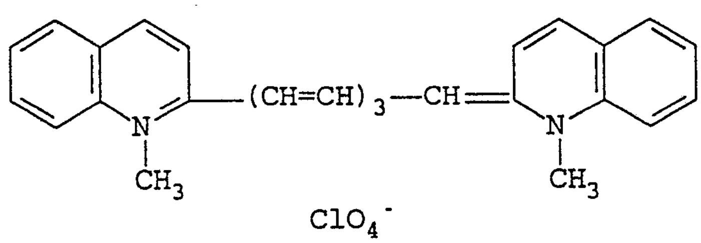

[e]

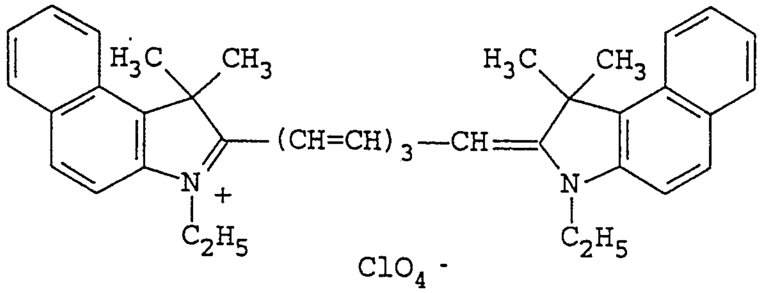

[f]

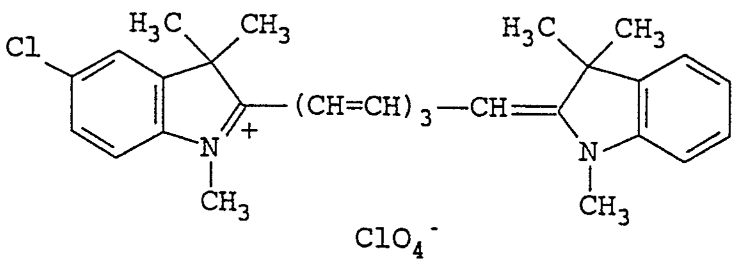

[g]

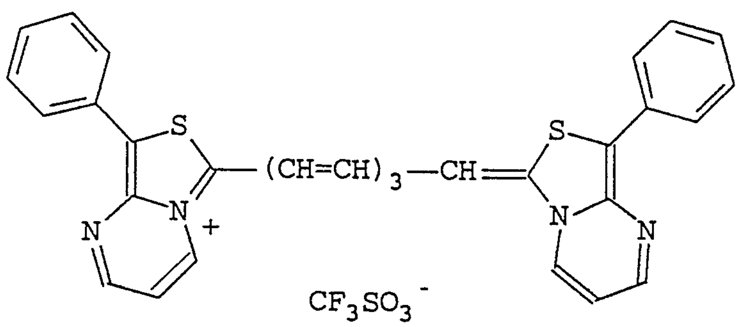

[h]

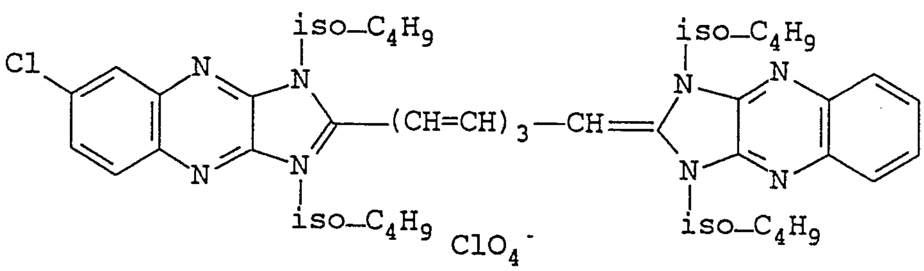

[i]

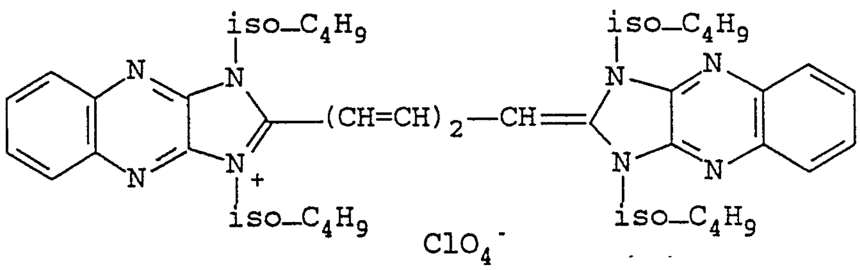

[j]

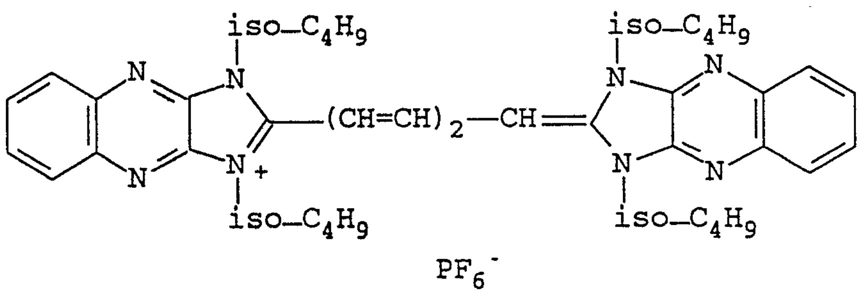

[k]

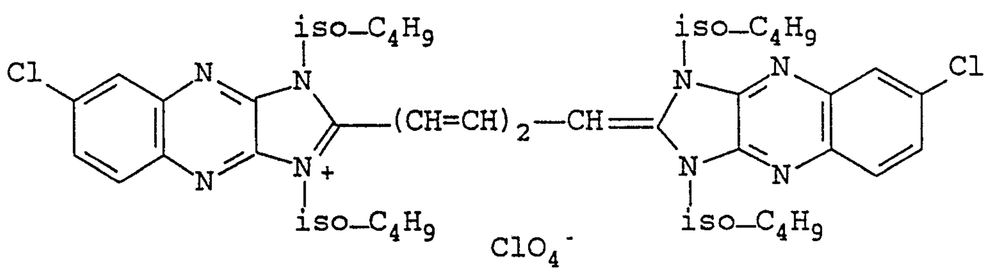

[l]

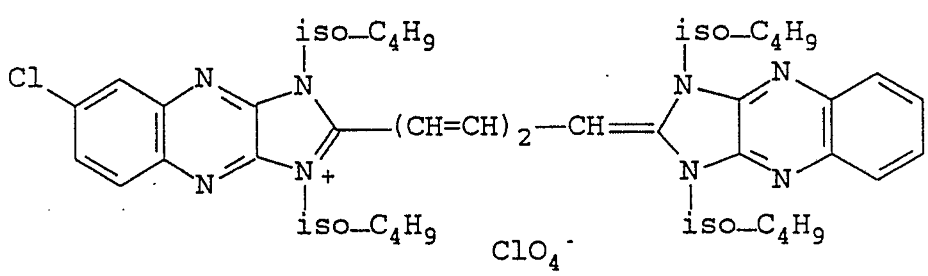

In the invention, the above-mentioned specific cyanine dye, which are already known, can be employed in combination with other dyes which are conventionally used as recording materials of information recording media. Examples of the dyes employable in combination with the specific cyanine dye include a cyanine dye other than the above-mentioned cyanine dye, a phthalocyanine dye, a pyrylium dye, a thiopyrylium dye, an azulenium dye, a squarillium dye, a metal complex salt dye such as Ni or Cr, naphthoquinone dye, an anthraquinone dye, an indophenol dye, an indoaniline dye, a triphenylmethane dye, a triallylmethan dye, an

aminium dye, a nitroso compound and a diimmonium dye other than the following diimmoium dye. Among those dye, preferred are dyes showing high absorption for a light in the wavelength region of near infrared rays such as 700 to 900 nm, because a semiconducter laser giving the near infrared rays is used in practical as a laser for recording and reproducing information.

The dye solution composition of the invention contains a diimmonium compound having the formula (II):

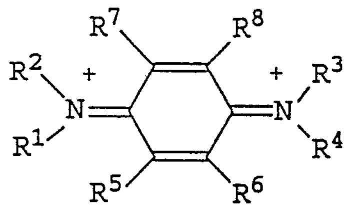

$2/nX^{n-}$ (II)

in which each of $R^1$, $R^2$, $R^3$, and $R^4$ is independently an alkyl group, an alkenyl group or aryl group, which may be a substituted group; each of $R^5$, $R^6$, $R^7$ and $R^8$ is independently hydrogen, a halogen atom, an alkyl group which may be a substituted group, an alkenyl group which may be a substituted group, a phenyl group which may be a substituted group, an alkoxy group which may be a substituted group, a phenoxy group which may be a substituted group, an acyl group which may be a substituted group, an alkylsulfonyl group which may be a substituted group, a benzensulfonyl group which may be a substituted group, or a cyano group; $R^5$, $R^6$ ,$R^7$ and $R^8$ may be the same as or different from each other; n is 1 or 2; and each combination of $R^1$ and $R^2$, $R^3$ and $R^4$, $R^5$ and $R^6$, and $R^7$ and $R^8$ may be linked to each other, respectively, to form a ring.

Preferred examples of the group indicated by $R^1$, $R^2$, $R^3$, and $R^4$ are an alkyl group having 1 - 10 carbon atoms which may be a substituted group or a phenyl group having 6 - 30 carbon atoms which may be a substituted group, and most preferred is phenyl group having 6 - 22 carbon atoms which may contain an electron donating group. Preferred examples of the rings formed by linking $R^1$, $R^2$, $R^3$, and $R^4$ are saturated hetero rings such as a pyrrolidine ring, a piperidine ring and a morpholine ring. Preferred examples of the group indicated by $R^5$, $R^6$ ,$R^7$ and $R^8$ are hydrogen, F, Cl, Br, an alkyl group having 1 -8 carbon atoms which may be a substituted group, a phenyl group having 6 - 12 carbon atoms which may be a substituted group, an alkoxy group having 1 - 8 carbon atoms which may be a substituted group, a phenoxy group having 6 -12 carbon atoms which may be a substituted group, and an acyl group having 1 - 8 carbon atoms which may be a substituted group. Most preferred are hydrogen, F, Cl, an alkyl group having 1-8 carbon atoms which may be a substituted group, and an alkoxy group having 1 - 8 atoms which may be a substituted group. As the preferred substituent group on those groups, there can be mentioned F, Cl, CN, a phenyl group, an alkoxy group having 1 - 4 carbon atoms, an alkylthio group having 1 - 4 carbon atoms, a hydroxyl group, an acyloxy group having 2 - 8 carbon atoms, an alkylsulfonyl group having 1 - 4 carbon atoms and phenylsulfonyl group having 6 - 10 carbon atoms which may be a substituted group.

Examples of the anions indicated by $X^{n-}$ in the formula (II) included halogen ions such as $Cl^-$, $Br^-$ and $I^-$; sulfuric acid ions such as $SO_4^{2-}$, $HSO_4^-$ and $CH_3OSO_3^-$; sulfonic acid ions such as paratoluenesulfonic acid ion, p-chlorobenzensulfonic acid, methanesulfonic acid ion, octanesulfonic acid ion, naphthalene-1,5-disulfonic acid ion and trifluoromethanesulfonic acid ion; carboxylic acid ions such as acetic acid ion, oxalic acid ion and succinc acid ion; heteropolyacid ions such as $PF_6^-$, $BF_4^-$, $ClO_4^-$, $IO_4^-$, tungstic acid ion and tongstophosphoric acid ion; phenolate ions such as $H_2PO_4^-$, $NO_3^-$ and picric acid ion.

The diimmonium compound having the above formula (II) is preferably a compound having the following formula (IIa):

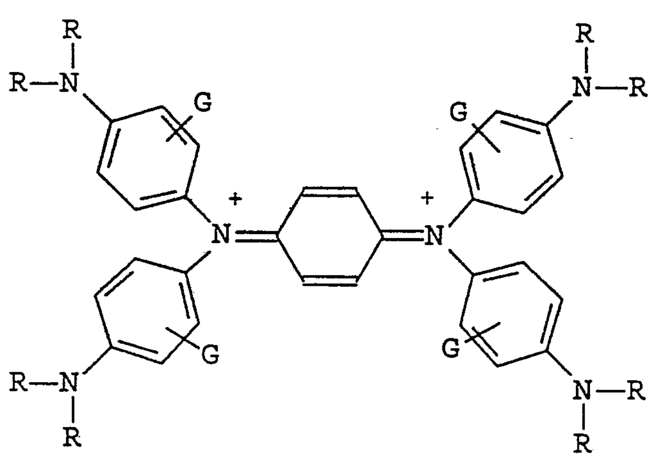

$2/nX^{n-}$ (IIa)

in which R is an alkyl group having 1 - 12 carbon atoms which may be a substituted group; G is hydrogen, an alkyl group having 1 - 6 carbon atoms or phenyl group; $X^{n-}$ is an n-valent anion; and n is 1 or 2.

The alkyl group indicated by R in the formula (IIa) may be in the form of either straight chain, branch or ring, and preferred is an alkyl group of straight chain. As the preferred substituent group on the alkyl group which is indicated by R, there can be mentioned F, Cl, CN, a phenyl group having 6 - 10 carbon atoms which may be a substituted group, a phenoxy group having 6 - 10 carbon atoms which may be a substituted group, an alkoxy group having 1 - 10 carbon atoms which may be a substituted group, an alkylthio group having 1 - 10 carbon atoms, an alkylsulfonyl group having 1 - 10 carbon atoms, a phenylthio group having 1 -10 carbon atoms which may be a substituted group, a phnylsulfonyl or hydroxyl group having 1 - 10 carbon atoms which may be a substituted group, an acyl group having 1 - 10 carbon atoms which may be a substituted group, an acyloxy group having 1 - 10 carbon atoms which may be a substituted group, a sulfoneamide group having 1 - 10 carbon atoms which may be a substituted group, and a sulfamoyl group having 1 - 10 carbon atoms which may be a substituted group. Most preferred is an alkyl group having 1 - 8 carbon atoms which may contain F, Cl or CN.

The group indicated by G in the formula (IIa) is preferably hydrogen or a methyl group.

Preferred examples of the anions indicated by $X^{n-}$ in the formula (IIa) include $Cl^-$, $Br^-$, $I^-$, $CH_3OSO_3$, perfluorosulfonic acid ion such as paratoluenesulfonic acid ion, p-chlorobenzenesulfonic acid ion, methanesulfonic acid ion, butanesulfonic acid ion, naphthalen-1,5-disulfonic acid ion, $PF_6^-$, $BF_4^-$, and $ClO_4^-$. Among them, more preferred are trifluoromethanesulfonic acid ion, $PF_6^-$ and $ClO_4^-$, and most preferred are trifluoromethanesulfonic acid ion and $PF_6^-$ from the viewpoint of impossibility of explosion.

Concrete examples of diimmonium compounds having the above formula (IIa) are given below, but those examples by no means restrict the present invention.

[1]

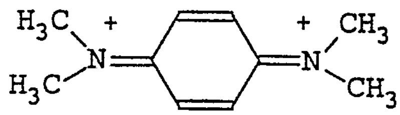

$2ClO_4^-$

[2]

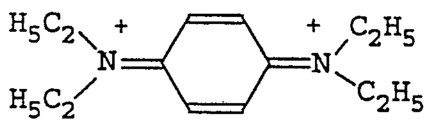

$2PF_6^-$

[3]

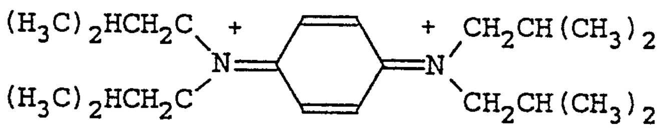

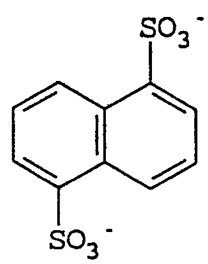

[4]

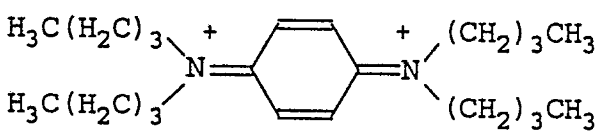

$2ClO_4^-$

[5]

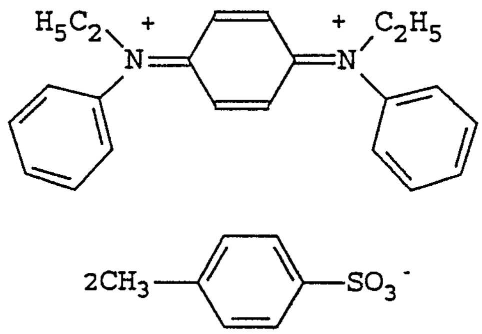

[6]

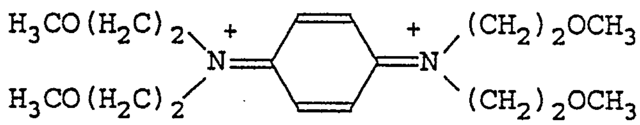

$2CF_3SO_3^-$

[7]

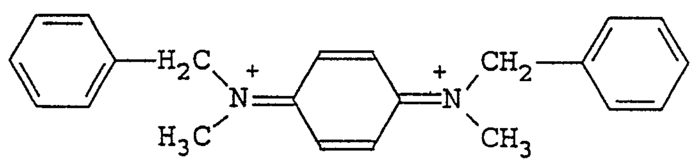

$2BF_4^-$

[8]

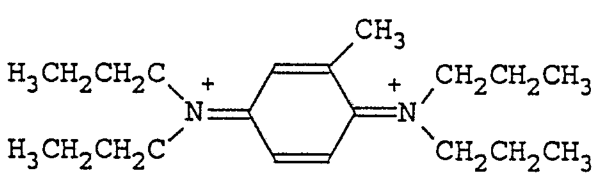

$2ClO_4^-$

[9]

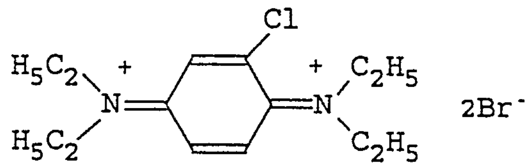

[10]

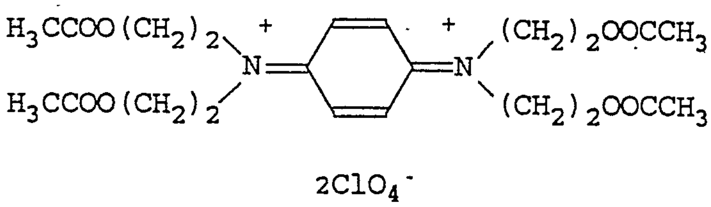

[11]

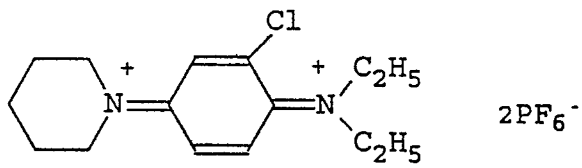

[12]

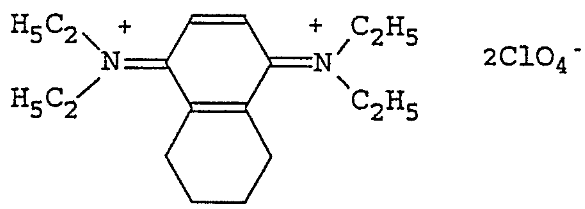

[13]

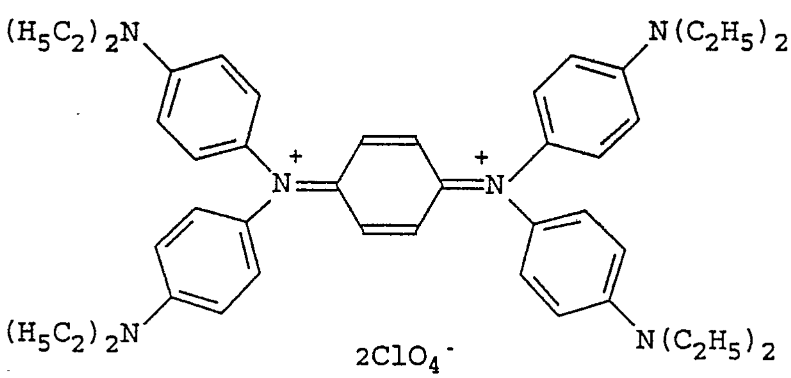

[14]

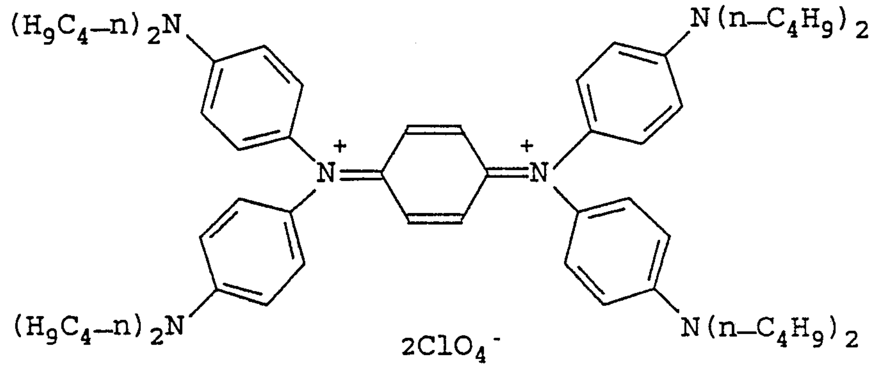

[15]

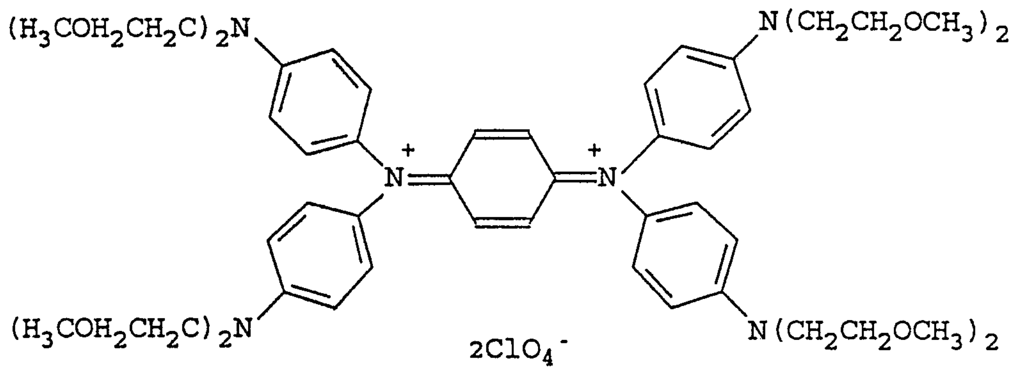

[16]

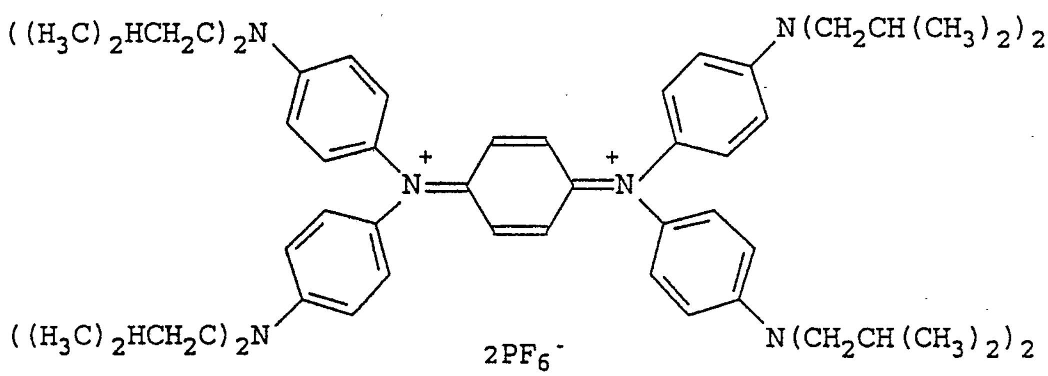

[17]

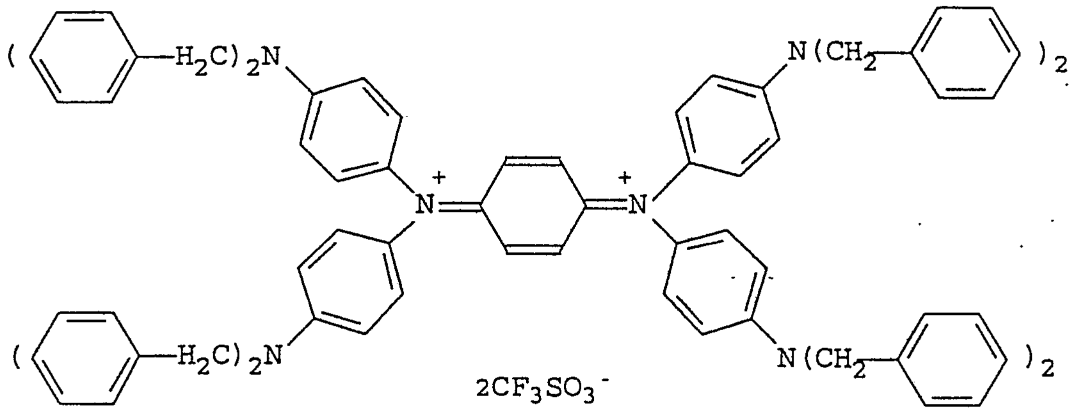

[18]

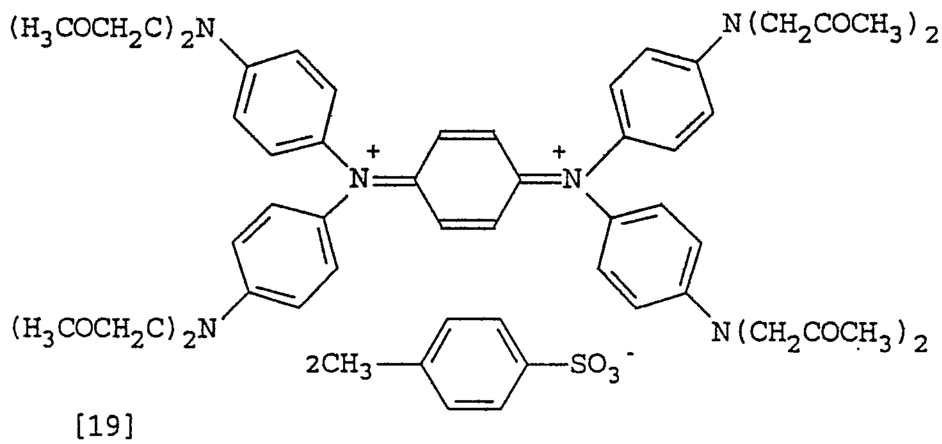

[19]

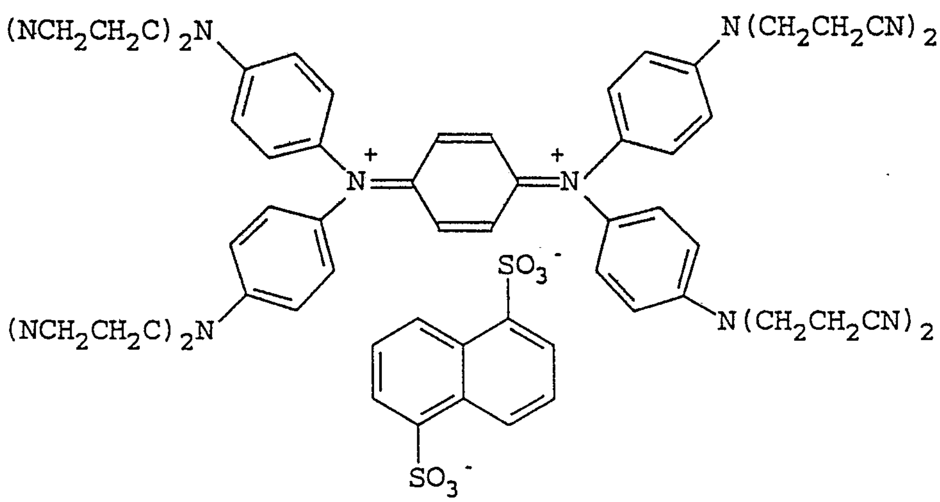

[20]

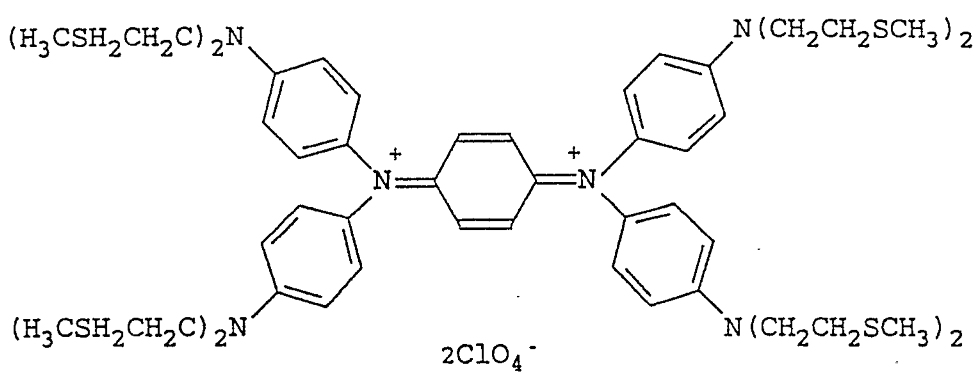

[21]

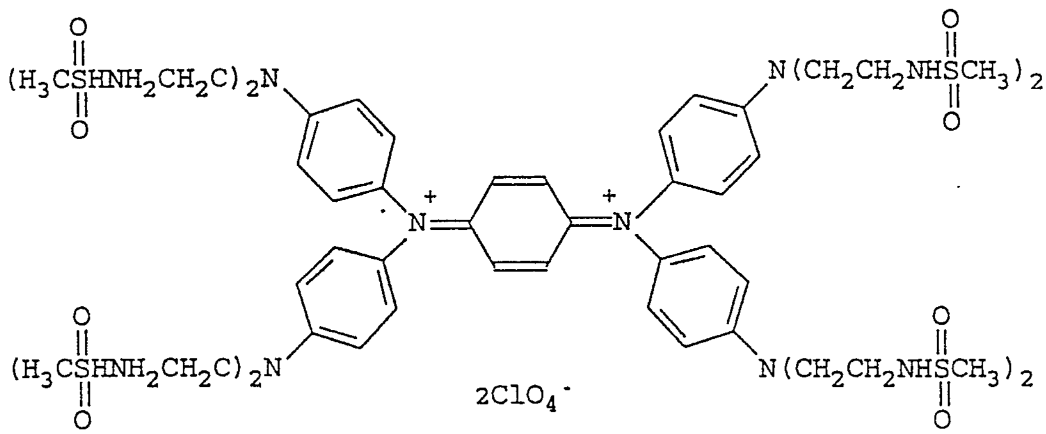

[22]

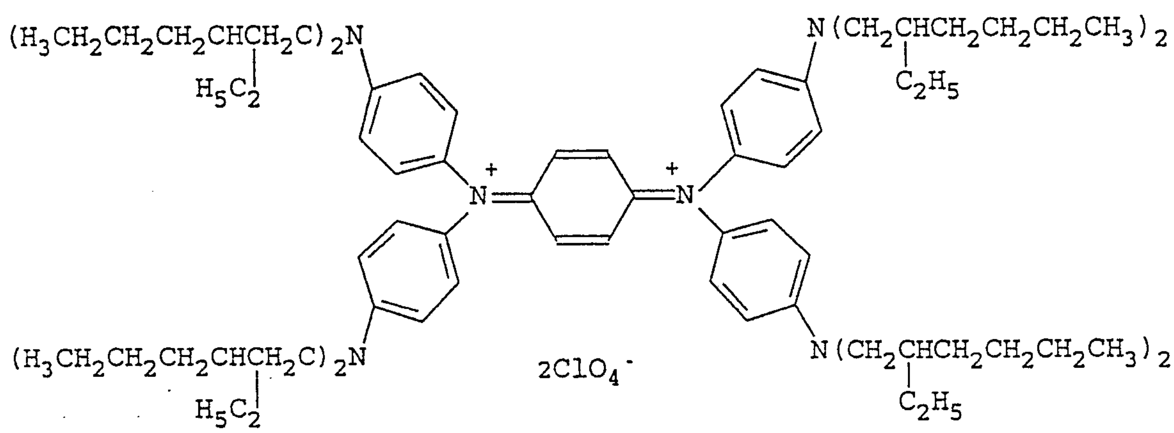

[23]

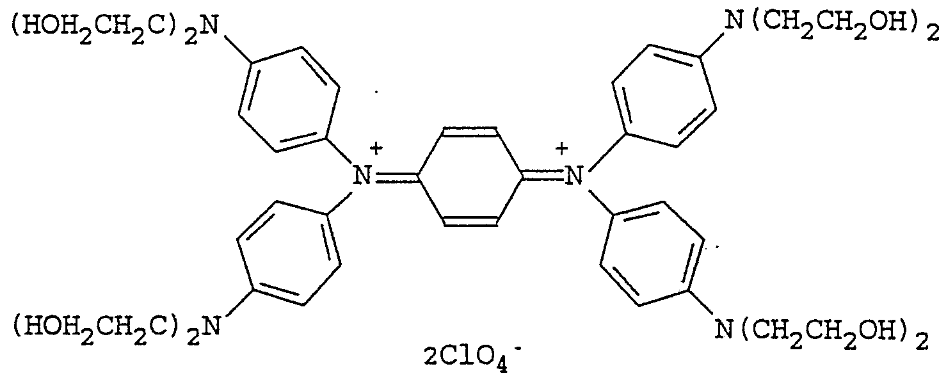

[24]

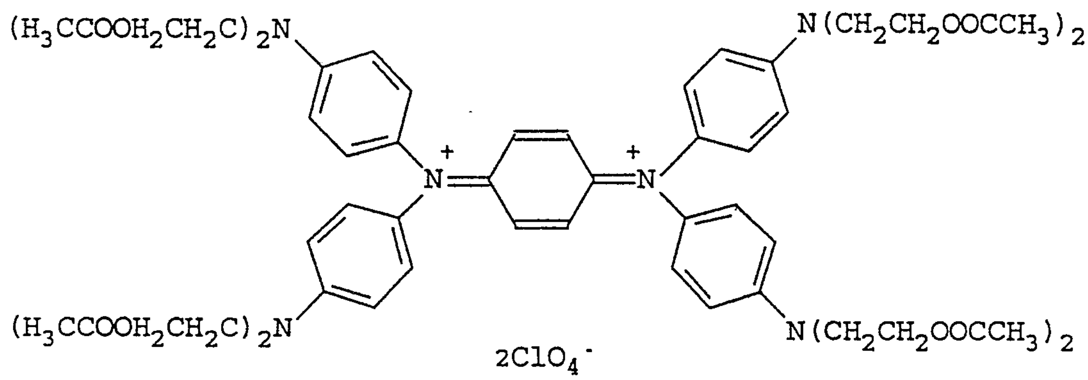

The specific diimmonium compound employable in the invention has its maximum absorption wavelength of not shorter than 900 nm, and hence it is assumed that the specific compound absorbs excessive energy out of the energy absorbed by the aforementioned specific cyanine dye, said excessive energy assumably causing deterioration of the cyanine dye. Thus, the photo-deterioration of the cyanine dye can be prevented. The ratio between the amount of the cyanine dye and the amount of the diimmonium compound used in the invention is preferably in the range of 99.99 : 0.01 to 50 : 50 (cyanine dye : diimmonium compound, by weight), more preferably in the range of 99.9 : 0.1 to 80 : 20. When the amount of the diimmonium compound is less than 0.01 by weight, the energy absorption by the diimmonium compound cannot be made sufficiently. When the amount of the diimmonium compound exceeds 50 by weight, the reflectance of the resulting recording layer is reduced.

The formation of the recording layer can be done by dissolving the above-mentioned dye (as well as a binder, if desired) in a solvent to prepare a coating solution, then coating the solution over the surface of the plastic substrate, and drying the coated layer.

As the solvent for preparing a coating solution of the present invention (i.e., dye solution), a liquid compound containing fluorine is required to be employed. Examples of the fluorine-containing compounds employable in the invention include a fluorinated alcohol, a fluorine-substituted ketone, a fluorine-substituted ester, a fluorinated carboxylic acid, a fluorine-substituted amide, a fluorinated alkane and a fluorinated ether.

As the fluorinated alcohol, there can be mentioned, for example, a compound having the formula (III):

$A\text{-}CH_2OH$ (III)

in which A is $F-(C_nF_{2n})-$ or $H-(C_nF_{2n})-$ wherein n is an integer of 1 to 6; and A may be in the form of either straight chain or branch.

Concrete examples of the compounds having the formula (III) are as follows.

$H\text{-}CF_2\text{-}CF_2\text{-}CH_2OH$

$H\text{-}CF_2\text{-}CF_2\text{-}CF_2\text{-}CF_2\text{-}CH_2OH$

$CF_3\text{-}CH_2OH$

$F\text{-}CF_2\text{-}CF_2\text{-}CH_2OH$

$F-CF_2-CF_2-CF_2-CF_2-CH_2OH$

As the fluorine-substituted ketone and the fluorine-substituted ester, there can be mentioned, for example, a compound having the formula (IV):

$$A-\overset{\overset{O}{\|}}{C}-B \qquad (IV)$$

in which each of A and B is a substituted or unsubstituted alkyl, phenyl, alkoxy or phenoxy group; and at least one of A and B contains at least one fluorine atom.

Examples of the substituent groups on A or B in the above formula (IV) include chlorine atom, bromine atom, nitro group, hydroxyl group, and a substituted or unsubstituted group of alkyl, phenyl, alkoxy, phenoxy, carboalkoxy, carbophenoxy, alkoxycarbonyl or phenoxycarbonyl. Each of A and B preferably is $-CF_3$, $CF_3-(CF_2CF_2)_h-$, $H-(CF_2CF_2)_i-$, $H-(CF_2CF_2)_j-CH_2-$, $OCF_3$, $CF_3-(CF_2CF_2)_h-O-$, $H-(CF_2CF_2)_i-O-$ or $H-(CF_2CF_2)_j-CH_2O-$, wherein each of h, i and j is an integer of 1 to 3. The molecular weight of said compounds preferably is not more than 400.

Concrete examples of the compounds having the above formula (IV) are as follows.

$CF_3COCF_3$
$CF_3COOCH_3$
$CF_3COOC_2H_5$
$CF_3COCH_2COCF_3$
$CF_3COCH_2COCH_3$
$CH_3COOCH_2CF_3$
$CF_3COOCH_2CF_3$
$CH_3COOCH_2CF_2CF_2H$
$HCF_2CF_2CH_2OCOOCH_2CF_2CF_2H$

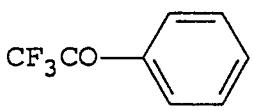

$CF_3CF_2CF_2COOC_2H_5$
$CF_3(CF_2)_4COOCH_3$

As the fluorine-substituted benzene, there can be mentioned, for example, a compound having the formula (V):

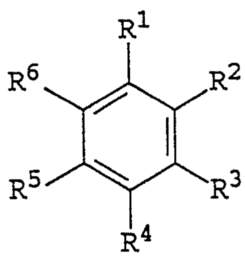

(V)

in which $R^1$ is a fluorine atom: and each of $R^2$ to $R^6$ is hydrogen atom, fluorine atom, chlorine atom, bromine atom, or a group of nitro, hydroxyl, cyano, substituted or unsubstituted alkyl, phenyl, alkoxy, phenoxy, acyl or acyloxy.

In the above formula (V), each of $R^2$ to $R^6$ preferably is hydrogen atom, fluorine atom, chlorine atom or cyano group. The molecular weight of the compound preferably is not more than 400.

Concrete examples of the compounds having the above formula (V) are as follows.

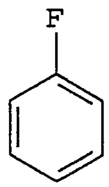 , 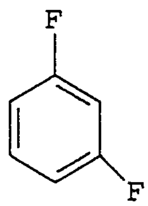 , 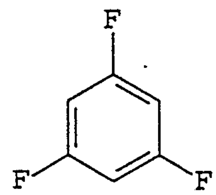 , 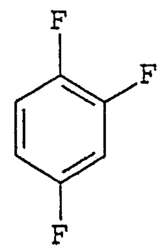

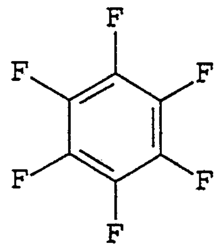 , 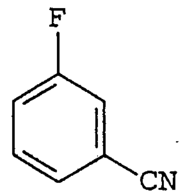 , 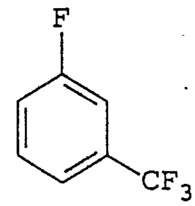

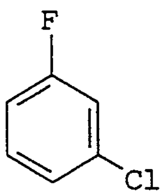 , 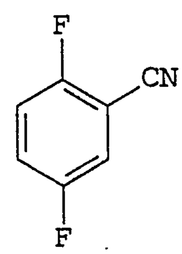 , 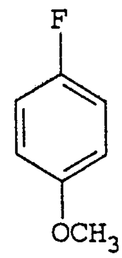

As the fluorinated alkane or the fluorinated ether, there can be mentioned a compound which is alkane or ether having 1 - 8 carbons and contains at least one fluorine atom. The compound may take any form of straight chain, ring and branch. In those compounds, a hydrogen atom may be further substituted with chlorination, bromine atom, cyano group, nitro group, a substituted or unsubstituted alkoxy, alkylsulfonyl or alkylsulfinyl group in addition to fluorine atom. Most preferred is chlorine atom or a substituted or unsubstituted alkoxy group having 1 - 4 carbon atoms. The molecular weight of said compound preferably is not more than 400.

Concrete examples of the compounds are as follows.

$CCl_2F_2$
$CCl_3F$
$ClF_2C-CClF_2$
$F_2CHCH_3$
$CHCL_2CF_2OCH_3$
$H(CF_2)_4OCH_3$
OH
$CF_3$ CH $OC_2H_5$
$CF_3CH_2OC_2H_5$
$CF_2H-CClF-OCH_3$

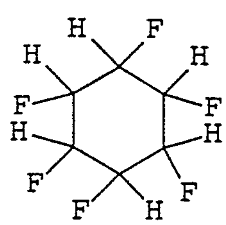

As the fluorinated carboxylic acid, there can be mentioned, for example, a compound having the formula (VI):

$CF_3(CF_2)_nCOOH$ (VI)

in which n is an integer of 2 to 4.

As the fluorinated carbonamide, there can be mentioned, for example, a compound having the formula (VII):

$CF_3(CF_2)_nCONH_2$ (VII)

in which n is an integer of 2 to 4.

Among the above-described fluorine-containing compounds, preferred is a fluorinated alcohol. The compounds employable in the invention are by no means restricted to the above-mentioned ones, and any other compound can be also employed provided that the compound is an organic compound containing at least one fluorine atom in one molecule and serves as a solvent for dyes.

In the present invention, the above-mentioned fluorine-containing compounds can be employed independently or in combination with more other solvents.

Examples of the solvents employable in combination with the fluorine-containing compound include solvents such as toluene, xylene, ethyl acetate, butyl acetate, cellosolve acetate, methyl ethyl ketone, dichloromethane, 1,2-dichloroethane, chloroform, dimethylformamide, methylisobutyl ketone, cyclohexanone, cyclohexane, tetrahydrofuran, ethyl ether, dioxane, ethanol, n-propanol, isopropanol, and n-butanol. The coating solution for the formation of a recording layer may further contain other additives such as an antioxidant, a UV-absorbent, a plasticizer and a lubricant according to the purpose.

In the case of using a binder for the preparation of the coating solution, examples of the binders include natural organic polymer materials such as gelatin, cellulose derivative, dextran, rosin and rubber; and synthetic organic polymer materials such as hydrocarbon resins (e.g., polyethylene, polypropylene, polystyrene and polyisobutylene), vinyl resins (e.g., polyvinyl chloride, polyvinylidene chloride and vinyl chloride/vinyl acetate copolymer), acrylic resins (e.g., polymethyl acrylate and polymethyl methacrylate), and precondensates of thermosetting resins ( e.g., polyvinylalcohol, chlorinated polyethylene, epoxy resin, butyral resin, rubber derivative and phenol formaldehyde resin).

When the binder is used as a material of the recording layer, the ratio of the dye to the binder is generally in the range of 0.01 to 99 wt.%, preferably 1.0 to 95 wt.%. In the case of using a mixed solvent of the liquid fluorine-containing compound and other solvent, the ratio of the liquid fluorine-containing compound to the whole solvent varies depending on the combination and kinds of the dye or the substrate. Generally, the ratio of the fluorine-containing solvent to the whole solvent is in the range of 5 to 95 wt.%, preferably 30 to 90 wt.%. The resulting coating solution generally has a dye concentration ranging from 0.01 to 10 wt.%, preferably 0.1 to 5 wt.%.

The recording layer may be in the form of a single layer or plural layers, and in any case, the thickness of the recording layer is generally in the range of 0.01 to 10 μm, preferably in the range of 0.02 to 1 μm. The recording layer may be provided on only one surface of the substrate or both surfaces of the substrate.

The coating procedure can be carried out by a conventional method such as spray coating, spin coating, dip coating, roll coating, blade coating, doctor roll coating and screen printing

On the recording layer may be provided a reflecting layer for the purpose of increasing the S/N ratio in the reproduction procedure of information or improving a sensitivity in the recording layer is essentially composed of a light-reflecting material. The light-reflecting material has a high reflectance for the laser beam. Examples of the light-reflecting materials include metals and semimetals such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al. Ga, In, Si, Ge, Te, Pb, Po, Sn and Bi. Preferred are Al, Cr and Ni, These materials can be used alone or in combination. Alloys thereof can be also employed in the invention.

The reflecting layer can be formed on the recording layer using the light-reflecting material according to a known method such as deposition, sputtering or ion plating. The thickness of the reflecting layer is generally in the range of 100 to 3,000 angstroms.

The reflecting layer may be provided between the substrate and the recording layer, and in this case, the recording and reproduction of information is carried out from the recording layer side, namely the opposite side of the substrate side.

A protective layer may be further provided on the recording layer (or the reflecting layer) to physically or chemically protect the recording layer. The protective layer can be also provided on the surface of the substrate where the recording layer is not provided to enhance a resistance to damage or humidity. As a material of the protective layer, there can be mentioned inorganic materials such as SiO, $SiO_2$, $MgF_2$ and $SnO_2$; and organic materials such as thermoplastic resins, thermosetting resins and UV-curable resins.

The protective layer can be formed on the recording layer (or the reflecting layer) and/or the substrate by laminating a plastic film having been prepared by exrtusion processing over any of those layers and/or the substrate by way of an adhesive layer. Otherwise, a method of vacuum deposition, sputtering or coating cam be also applied to form the protective layer. In the case of using the thermoplastic resin or the thermosetting resin, the resin is dissolved in an appropriate solvent to prepare a coating solution, and the solution is coated over the recording layer and/or the substrate. The coated layer is then dried to form a protective layer. In the case of using the UV-curable resin, the only resin or a solution of the resin in an appropriate solvent is coated over the recording layer and/or the substrate, and the coated layer of the solution is irradiated with ultraviolet rays to cure the layer so as to form a protective layer. In any case, the coating solution may further contain a variety of additives such as an antistatic agent, an antioxidant and a UV-absorbent according to the purpose. The thickness of the protective layer is generally in the range of 0.1 to 100 μm.

The structure of the information recording medium prepared by the process of the present invention is by no means limited to the above-mentioned structure, and other structures can be also prepared according to the invention. For example, there can be prepared by the process of the invention an information recording medium in which two substrates having the above-mentioned constitution and interposing the recording layer

are combined using an adhesive, or an information recording medium of air-sandwich structure in which two disc-shaped substrates, at least one of those substrates having the abovementioned constitution, are combined with each other by way of a ring-shaped outer spacer and a ring-shaped inner spacer so as to form a closed space surrounded by the two substrates and the two spacers.

Examples of the present invention are given below, but these examples by no means restrict the invention.

## Example 1

1.6 g of the following cyanine dye having the aforementioned formula (i) and 0.4 g of the following diimmonium dye having the aforementioned formula (14) were dissolved in 200 cc of 2,2,3,3-tetrafluoropropanol ($HCF_2CF_2CH_2OH$) to prepare a coating solution.

Cyanine dye (i):

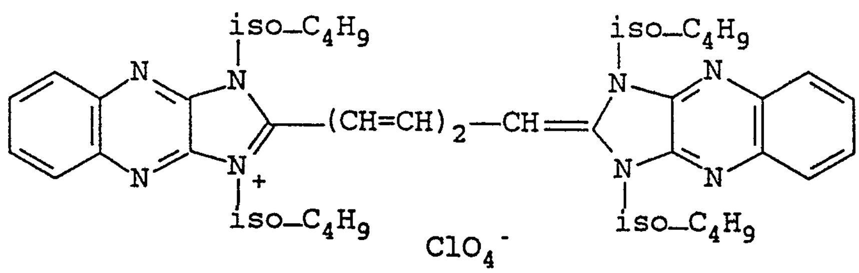

Diimmonium dye (14):

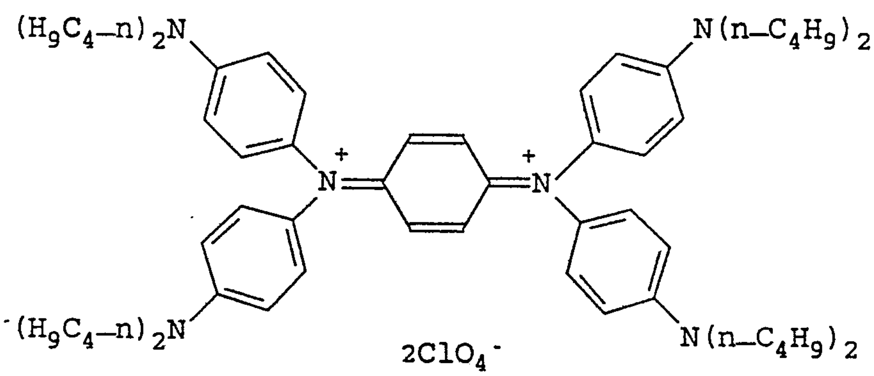

The obtained solution was coated over a disc-shaped polycarbonate substrate having been provided with a tracking guide (outer diameter: 130 mm, inner diameter: 15mm, thickness: 1.2 mm, track pitch: 1.6 µm, depth of groove: 800 angstroms) by means of spin coating at 2,000 r.p.m. to give a coated layer of the solution, and the coated layer was dried at 70°C for 10 minutes to form a recording layer having dry thickness of 0.06 µm on the substrate.

Thus, an information recording medium consisting of a substrate and a recording layer was prepared.

## Example 2

The procedure of Example 1 was repeated except for using the following cyanine dye giving the aforementioned formula (a) instead of the cyanine dye having the formula (i), to prepare an information recording medium consisting of a substrate and a recording layer.

Cyanine dye (a):

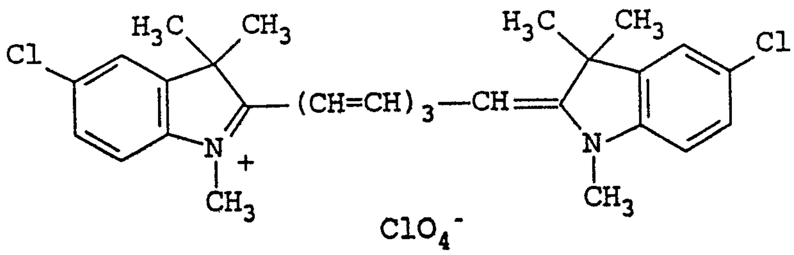

Evaluation of Information Recording Medium

The information recording media obtained in Example and Examples 2 were subjected to recording and reproducing procedures under the following conditions.
Wavelength of semiconductor laser: 830 nm
Linear speed: 5.0 m/sec.
Modulation frequency: 2.5 MHz
Recording power: 8.0 mW
Reproducing power: 1.0 mW (Example 1) and 0.8 mW (Example 2)

The information recorded on the recording media at the above recording power was reproduced at the above reproducing power to measure the reflectance (Rf) and C/N ratio (carrier versus noise ratio) of the information recording media.

Further, in order to evaluate the durability of the information recording media in the reproducing procedure, the recording media were subjected to continuous reproduction to measure reproduction times in which the reproduction (reading) of information from the media was possible.

The results are set forth in Table 1.

Table 1

| | Rf (%) | C/N Ratio (dB) | Durability (times) |
|---|---|---|---|
| Example 1 | 40 | 50 | $10^6<$ |
| Example 2 | 30 | 50 | $10^6<$ |

As is evident from the results set forth in Table 1, the information recording media prepared using the dye solution of the present invention showed high reflectance and high C/N ratio as well as high durability in the recording procedure.

**Claims**

1. A dye solution comprising a cyanine dye and a diimmonium compound dissolved in a liquid fluorine-containing compound, wherein:
said cyanine dye has the formula (I):
$\Phi^+$-(CH=CH)$_n$CH = $\Psi$ $(X^{m-})_{1/m}$ (I)
in which each of $\Phi$ and $\Psi$ is independently a residue of an indolenine ring, a thiazole ring, an oxazole ring, a selenazole ring, an imidazole ring, a pyridine ring, a thiazolopyrimidine ring, an imidzoquinoxaline ring or an amine, each of which may be condensed with an aromatic ring; n is 0 or an integer of 1 to 5; $X^{m-}$ is an m-valent anion; m is 0 or 1; and $X^{m-}$may be substituted on $\Phi$, -(CH=CH)$_n$CH= or $\Psi$ to form an inner salt; and
said diimmonium compound has the formula (II):

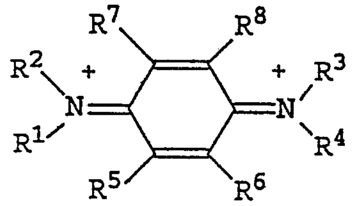

2/nX$^{n-}$ (II)

in which each of $R^1$, $R^2$, $R^3$, and $R^4$ is independently an alkyl group, an alkenyl group or aryl group,each of which may be a substituted group; each of $R^5$, $R^6$, $R^7$ and $R^8$ is independently hydrogen, a halogen atom, an alkyl group which may be a substituted group, an alkenyl group which may be a substituted group, a phenyl group which may be a substituted group, an alkoxy group which may be a substituted group, a phenoxy group which may be a substituted group, an acyl group which may be a substituted group, alkylsulfonyl group which may be a substituted group, a benzensulfonyl group which may be a substituted group, or a cyano group; n is 1 or 2; and each combination of $R^1$ and $R^2$, $R^3$ and $R^4$, $R^5$ and $R^6$, and $R^7$ and $R^8$ may be linked to each other, respectively, to form a ring.

2. The dye solution as claimed in claim 1, wherein each of Φ and Ψ in the formula (I) is a residue of an indolenine ring or an imidazoquinoxaline ring, each of which may be condensed with an aromatic ring.

3. The dye solution as claimed in claim 1, wherein the liquid fluorine-containing compound is at least one compound selected from the group consisting of a fluorinated alcohol, a fluorine-substituted ketone, a fluorine-substituted ester, a fluorine-substituted amide, a fluorine-substituted benzene, a fluorinated alkane and a fluorinated ether.

4. The dye solution as claimed in claim 1, wherein the liquid fluorine-containing compound is a fluorinated alcohol having the formula (III):

$A\text{-}CH_2OH$ (III)

in which A is $F(C_nF_{2n})$ or $H(C_nF_{2n})$ wherein n is as integer of 1 to 6.

5. The dye solution as claimed in claim 1, wherein the ration between the cyanine dye and the diimmonium compound is in the range of 99.99 : 0.01 to 50 : 50.

6. A process for the preparation of an information recording medium comprising a plastic substrate and a recording layer of dye for writing or reading information by means of a laser beam which is provided on the substrate, wherein said recording layer is formed on the substrate by coating a dye solution composition which contains a cyanine dye and a diimmonium compound dissolved in a fluorine-containing compound solvent over the substrate to form a coated layer, and drying the coated layer;

said cyanine dye has the formula (I):

$\Phi^+\text{-}(CH=CH)_nCH = \Psi\,(X^{m-})_{1/m}$ (I)

in which each of Φ and Ψ is independently a residue of an indolenine ring, a thiazole ring, an oxazole ring, a selenazole ring, an imidazole ring, a pyridine ring, a thiazolopyrimidine ring, an imidzoquinoxaline ring or an amine, each of which may be condensed with an aromatic ring; n is 0 or an integer of 1 to 5; $X^{m-}$ is an m-valent anion; m is 0 or 1; and $X^{m-}$may be substituted on Φ, $-(CH=CH)_nCH=$ or Ψ to form an inner salt;and

said diimmonium compound has the formula (II):

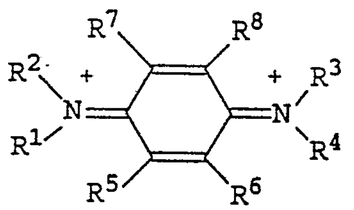

2/nX$^{n-}$ (II)

in which each of $R^1$, $R^2$, $R^3$, and $R^4$ is independently an alkyl group, an alkenyl group or an aryl group, each of which may be a substituted group; each of $R^5$, $R^6$, $R^7$ and $R^8$ is independently hydrogen, a halogen atom, an alkyl group which may be a substituted group, an alkenyl group which may be a substituted group, a phenyl group which may be a substituted group, an alkoxy group which may be a substituted group, a phenoxy group which may be a substituted group, an acyl group which may be a substituted group, an alkylsulfonyl group which may be a substituted group, a benzensulfonyl group which may be a substituted group, or a cyano group; n is 1 or 2; and each combination of $R^1$ and $R^2$, $R^3$ and $R^4$, $R^5$ and $R^6$, and $R^7$ and $R^8$ may be linked to each other, respectively, to form a ring.

7. The process for the preparation of an information recording medium as claimed in claim 6, wherein each of Φ and Ψ in the formula (I) is a residue of an indolenine ring or an imidazoquinoxaline ring, each of which may be condensed with an aromatic ring.

8. The process for the preparation of an information recording medium as claimed in claim 6, wherein the liquid fluorine-containing compound is at least one compound selected from the group consisting of a fluorinated alcohol, a fluorine-substituted ketone, a fluorine-substituted ester, a fluorine-substituted amide, a fluorine-substituted benzene, a fluorinated alkane and a fluorinated ether.

9. The process for the preparation of an information recording medium as claimed in claim 6, wherein the liquid fluorine-containing compound is a fluorinated alcohol having the formula (III):

$A\text{-}CH_2OH$ (III)

in which A is $F(C_nF_{2n})$ or $H(C_nF_{2n})$ wherein n is as integer of 1 to 6.

10. The process for the preparation of an information recording medium as claimed in claim 6, wherein the ration between the cyanine dye and the diimmonium compound is in the range of 99.99 : 0.01 to 50 : 50.

11. The process for the preparation of an information recording medium as claimed in claim 6, wherein the plastic substrate is made of polycarbonate.